# FASCICULE DE BREVET EUROPEEN

(11) **EP 4 080 188 B1**
(45) Date de publication et mention de la délivrance du brevet: **07.05.2025**
(21) Numéro de dépôt: 22168558.9
(22) Date de dépôt: 14.04.2022
(51) Int. Cl.: G01N 1/40, C02F 11/00

(54) **PROCÉDÉ D'INERTAGE DES BOUES D'EXCAVATION**
VERFAHREN ZUR INERTISIERUNG VON AUSHUBSCHLAMM
METHOD FOR INERTING SLUDGE FROM EXCAVATION

(30) Priorité: 19.04.2021 FR 2104054
(43) Date de publication de la demande: 26.10.2022
(73) Titulaire: Eiffage GC Infra Linéaires, 78140 Vélizy-Villacoublay (FR)
(72) Inventeur: BOULANGÉ, Laurence, 38530 CHAPAREILLAN (FR); DOOM, Florian, 77144 MONTÉVRAIN (FR); DA CRUZ GOMES, Marina, 93200 SAINT DENIS (FR)
(74) Mandataire: Plasseraud IP

(56) Documents cités:
- EP-B1- 1 341 728
- CA-A1- 2 243 515

## Description

### Domaine technique

La présente divulgation relève du domaine de la caractérisation des boues d'excavation extraites par tunnelier, en particulier de la détermination de la concentration massique en élément(s) polluant(s) inorganique(s) dans ces boues d'excavation.

### Technique antérieure

Lors de toute construction sur ou dans le sol, en particulier lors du creusement de tunnel, l'aménagement du sol se fait par excavation. Sont alors extraites des quantités de matériau d'excavation qui dépendent de l'ampleur et du type de travaux. Typiquement, un tunnelier utilisé pour excaver un tunnel lors de la construction d'une ligne de métro produit environ 800 tonnes par jour de boues d'excavation.

Les boues d'excavation ainsi extraites contiennent des espèces chimiques variées. Certaines espèces chimiques proviennent de la composition de la roche ou du sable, on parle alors de matrice. D'autres espèces chimiques sont présentes en moins grande quantité, on parle alors de traces. Lorsque les traces présentent une toxicité, on les appelle polluants. Il existe une pollution endogène, provenant de l'environnement géologique du prélèvement, et une pollution liée à l'activité humaine locale, en surface. Ces espèces chimiques peuvent représenter un risque pour l'environnement lorsque les boues d'excavation sont stockées après avoir été extraites. Avant de stocker ces boues d'excavation, il est donc nécessaire de déterminer leur taux de contamination. La détermination de ce taux de contamination permet d'orienter les boues dans l'une des trois filières de traitement existantes. Ces trois filières de traitement sont les suivantes :
1) Les boues inertes sont stockées afin d'être valorisées,
2) Les boues faiblement contaminées sont stockées dans des décharges spécialisées (dont le sous-sol ne permet pas d'écoulement dans des nappes phréatiques),
3) Les boues contaminées sont envoyées en filière de valorisation pour récupérer les éléments polluants.

La sélection de la filière de traitement adaptée dépend de la concentration massique en polluant dans les boues d'excavation. Les valeurs seuils de concentration massique limite en polluant à respecter sont fixées par des textes législatifs. En France, il s'agit de la Décision n°2003/33/CE du 19.12.2002 établissant des critères et des procédures d'admission des déchets dans les décharges et des arrêtés du 30.12.2002 relatif au stockage de déchets dangereux et du 12.12.2014 relatif aux conditions d'admission des déchets inertes [...]. Selon cette Décision et ces arrêtés, les valeurs limites de concentration massique de chacun des éléments polluants inorganiques à détecter sont parmi les plus exigeantes en Europe. Comme indiqué dans la Tableau 1 ci-dessous, ces valeurs limites sont très faibles et très dispersées.

Si la concentration massique de chaque élément polluant inorganique contenu dans la boue d'excavation est inférieure à la valeur limite I.S.D.I. indiquée dans le Tableau 1, alors la boue d'excavation est considérée comme inerte. Elle peut alors être stockée dans des installations de stockage de déchets inertes afin d'être valorisée, par exemple en tant que matériau de construction ou pour la valorisation paysagère.

Si la concentration massique d'au moins un des éléments polluants inorganiques contenu dans la boue d'excavation est comprise entre les valeurs limites I.S.D.I et I.S.D.N.D. indiquées dans le Tableau 1, alors la boue d'excavation est considérée comme faiblement contaminée. Elle peut alors être stockée dans des installations de stockage de déchets non dangereux.

Si la concentration massique d'au moins un des éléments polluants inorganiques contenu dans la boue d'excavation est comprise entre les valeurs limites I.S.D.N.D. et I.S.D.D. indiquée dans le Tableau 1, alors la boue d'excavation est considérée comme contaminée. Elle est alors stockée dans des installations de stockage de déchets dangereux. Elle peut y être décontaminée pour récupérer et valoriser les éléments polluants inorganiques.

**[Tableau 1]**

| Récapitulatif des polluants à détecter en lixiviation et leur valeur limite de concentration massique | | | |
|---|---|---|---|
| **Eléments polluants inorganiques à détecter** | **Valeur limite I.S.D.I.*** | **Valeur limite I.S.D.N.D.**** | **Valeur limite I.S.D.D.***** |
| | **Concentration massique en mg/kg de matière sèche** | | |
| Antimoine (Sb) | 0,06 | 0,7 | 5 |
| Arsenic (As) | 0,5 | 2 | 25 |
| Baryum (Ba) | 20 | 100 | 300 |
| Cadmium (Cd) | 0,04 | 1 | 5 |
| Chrome (Cr) total | 0,5 | 10 | 70 |
| Cuivre (Cu) | 2 | 50 | 100 |
| Mercure (Hg) | 0,01 | 0,2 | 2 |
| Molybdène (Mo) | 0,5 | 10 | 30 |
| Nickel (Ni) | 0,4 | 10 | 40 |
| Plomb (Pb) | 0,5 | 10 | 50 |
| Sélénium (Se) | 0,1 | 0,5 | 7 |
| Zinc (Zn) | 4 | 50 | 200 |
| Chlore (sous forme de chlorures Cl⁻) | 800 | 1500 | 25000 |
| Fluor (sous forme de fluorure F⁻) | 10 | 150 | 500 |
| Soufre (sous forme de sulfate SO₄²⁻) | 1000 | 20000 | 50000 |

| | | | |
|---|---|---|---|
| I.S.D.I. : Installation de Stockage de Déchets Inertes I.S.D.N.D : Installation de Stockage de Déchets non Dangereux I.S.D.D : Installation de Stockage de Déchets Dangereux * Annexe Il de l'arrêté du 12.12.2014 ** Décision n°2003/33/CE du 19.12.2002 *** Annexe I de l'arrêté du 30.12.2002 | | | |

Si la concentration massique d'au moins un des éléments polluants inorganiques contenus dans la boue d'excavation est supérieure à la valeur limite I.S.D.D. indiquée dans le Tableau 1, alors la boue d'excavation est considérée comme fortement contaminée. Elle est alors stockée dans des installations spécifiquement dédiées à sa décontamination, à la récupération et la valorisation des éléments polluants inorganiques.

La procédure pour déterminer la concentration massique des éléments polluants inorganiques dans les boues d'excavation est fixée par des normes nationales. En France, il s'agit des normes françaises NF EN 12457-2 (1^{er} décembre 2002) et NF EN 16192 (1^{er} mars 2020). Selon ces normes, la quantité de polluant dans une boue d'excavation est déterminée par une analyse physicochimique de la composition du lixiviat obtenu à l'issue d'une lixiviation simulée de ladite boue d'excavation. Selon ces normes françaises, une lixiviation (traitement par l'eau bien connu qui entraîne la dissolution des espèces solubles) de la boue d'excavation est simulée pendant 24 heures à température ambiante (20°C ± 5°C). Puis le lixiviat (liquide résiduel de la lixiviation) est analysé pour déterminer la concentration massique des éléments polluants inorganiques dans ledit lixiviat. Cette concentration massique est en adéquation avec la concentration massique des éléments polluants inorganiques présents dans les boues d'excavation.

Les inventeurs ont constaté de manière surprenante que, pour certains éléments polluants inorganiques, il y a une mauvaise adéquation entre leur concentration massique dans le lixiviat et leur concentration massique dans la boue d'excavation. En effet leur concentration massique dans le lixiviat peut être bien plus élevée, et donc n'est pas en adéquation avec leur concentration massique dans la boue d'excavation.

Cette mauvaise adéquation donne lieu à une mauvaise classification des boues d'excavation. Cette mauvaise classification est à l'origine de problèmes environnementaux, car les boues d'excavation ne sont pas stockées dans l'installation de stockage en adéquation avec leur composition. Cette mauvaise classification pose aussi des problèmes économiques. En effet, la boue d'excavation, dont le lixiviat présente une teneur en matériaux inorganiques polluants plus élevée que la concentration massique réellement présente dans ladite boue, sera stockée dans une installation de stockage à un coût plus élevé que sa bonne installation de stockage. Au vu de la quantité de boues d'excavation à stocker lors de grands chantiers, cela représente une donnée économique non négligeable.

Après de nombreuses recherches les inventeurs ont constaté que cette mauvaise adéquation était causée par un changement des propriétés physicochimiques de ces éléments polluants inorganiques lors de la formation des boues d'excavation par le tunnelier. En effet ce changement des propriétés physicochimiques altère la solubilité dans l'eau de ces éléments polluants inorganiques et donc altère leur concentration massique dans le lixiviat. Par exemple, ce changement des propriétés physicochimiques peut être la transformation de ces éléments inorganiques en oxyanions. En effet, cette transformation augmente la concentration des éléments polluants inorganiques au sein du lixiviat car la solubilité dans l'eau des oxyanions est supérieure à la solubilité dans l'eau des éléments inorganiques non chargés.

La présente divulgation vise à résoudre les problèmes liés aux changements physicochimiques des éléments polluants inorganiques présents dans les boues d'excavation.

### Résumé

Ainsi un premier objet de l'invention porte sur une méthode de préparation d'un matériau d'excavation comprenant l'étape suivante :
a) inertage du matériau d'excavation pour obtenir un matériau inerté ;

l'étape a) étant réalisée par ajout d'un acide organique, d'un agent complexant, ou d'un acide diaminotétracarboxylique au matériau d'excavation,
l'agent complexant étant choisi parmi un alcool de sucre, un agent tensioactif cationique et leur mélange.

De façon avantageuse, l'étape a) d'inertage permet de limiter la transformation des éléments inorganiques présents dans le matériau d'excavation en oxyanions. Ainsi la concentration massique des éléments inorganiques dans un lixiviat obtenu à partir d'un échantillon de matériau inerté est en adéquation avec la concentration massique des éléments inorganiques dans le matériau d'excavation.

De plus, l'étape a) d'inertage permet avantageusement d'éviter le relargage des éléments polluants inorganiques du matériau d'excavation lors du stockage dudit matériau d'excavation, par exemple, dans une Installation de Stockage de Déchets Dangereux ou lors de la valorisation dudit matériau d'excavation en tant que matériau de construction.

Un deuxième objet de l'invention est une méthode de détermination de la concentration massique d'un élément polluant inorganique compris dans un matériau excavé, ladite méthode de détermination comprenant les étapes suivantes :
b) lixiviation d'un échantillon de matériau inerté obtenu lors de l'étape a) d'inertage de la méthode de préparation selon le premier objet de l'invention pour obtenir un lixiviat, et
c) détermination de la concentration massique de l'élément polluant inorganique dans le lixiviat.

De façon avantageuse, la concentration massique de l'élément polluant inorganique dans le lixiviat déterminée par la méthode de détermination du deuxième objet de l'invention est, grâce à l'étape a) d'inertage de la méthode de préparation selon l'invention, en adéquation avec la concentration massique de cet élément dans le matériau d'excavation.

La méthode de détermination du deuxième objet de l'invention permet également d'orienter le matériau d'excavation vers la filière de stockage de déchets adéquate ou vers la filière de valorisation adéquate.

Un troisième objet de l'invention est une méthode de stockage d'un matériau d'excavation comprenant une étape de stockage du matériau inerté obtenu lors de l'étape a) d'inertage de la méthode de préparation selon le premier objet de l'invention.

Un quatrième objet de l'invention est une méthode de valorisation d'un matériau excavé inerté comprenant une étape de valorisation du matériau inerté obtenu lors de l'étape a) d'inertage de la méthode de préparation selon le premier objet de l'invention en tant que matériau de construction.

### Description détaillée des modes de réalisation

Selon un premier objet de l'invention, il est proposé une méthode de préparation d'un matériau d'excavation comprenant l'étape suivante :
a) inertage du matériau d'excavation pour obtenir un matériau inerté ;

l'étape a) étant réalisée par ajout d'un acide organique, d'un agent complexant, ou d'un acide diaminotétracarboxylique au matériau d'excavation,
l'agent complexant étant choisi parmi un alcool de sucre, un agent tensioactif cationique et leur mélange.

Au sens de la présente demande, "matériau d'excavation" (aussi appelé "matériau excavé") désigne un matériau excavé lors de travaux de génie civil ou de construction que ce soit à la surface de la Terre, par exemple lors de fouilles ou de création de fondation, ou dans le sous-sol, par exemple lors du creusement de tunnels, cavernes et galeries. Typiquement, le matériau d'excavation comprend des :
- roches meubles tels que graviers, sables, limons, argiles et leurs mélanges ;
- rochers concassés ;
- matériaux provenant de constructions antérieures ou de sites pollués tels que des décharges ; ou
- boues d'excavation.

Selon un mode de réalisation, le matériau d'excavation est une boue d'excavation.

Typiquement, la boue d'excavation peut être produite par un tunnelier excavant un tunnel lors de la construction d'une ligne de métro, d'une ligne de train, d'une route.

Selon un mode de réalisation particulier, la boue d'excavation est extraite du sous-sol parisien.

L'étape a) d'inertage est réalisé par ajout puis mélange d'une espèce chimique choisie parmi un acide organique, un agent complexant, et un acide diaminotétracarboxylique au matériau d'excavation, en particulier un échantillon du matériau d'excavation. Typiquement, au cours de l'étape a), l'espèce chimique et le matériau d'excavation, en particulier un échantillon du matériau d'excavation, peuvent être mélangés pour obtenir un mélange homogène. Le mélange peut être réalisé par agitation mécanique, malaxage, injection, brassage, trituration et leurs combinaisons, en particulier par malaxage, injection et leur combinaison.

Sans vouloir être liés par aucune théorie, les inventeurs sont d'avis que :
- l'acide organique permet de diminuer le pH du matériau d'excavation et donc d'éviter la transformation de certains éléments inorganiques en oxyanions,

l'agent complexant permet de complexer les oxyanions et donc d'éviter leur solubilisation dans l'eau lors de la lixiviation, et
l'acide diaminotétracarboxylique combine les deux effets.
Ainsi la concentration massique des éléments inorganiques dans un lixiviat obtenu à partir d'un échantillon de matériau inerté est en adéquation avec la concentration massique des éléments inorganiques dans le matériau d'excavation.

Selon l'invention, l'acide mis en œuvre dans l'étape a) ne peut pas être un acide inorganique tel que l'acide phosphorique décrit dans EP 1 341 728 ou l'acide sulfurique décrit dans CA 2 423 515. En effet, l'élément inorganique d'un acide inorganique peut être solubilisé et entrainé dans le lixiviat obtenu à partir d'un échantillon de matériau inerté de sorte que la concentration massique en éléments inorganiques présents dans le lixiviat peut ne pas être en adéquation avec la concentration massique en éléments inorganiques présents dans le matériau d'excavation. De plus, l'élément inorganique d'un acide inorganique peut être relarguer sous forme d'élément polluant inorganique lors du stockage du matériau d'excavation ou lors de la valorisation du matériau d'excavation en tant que matériau de construction. Ce relargage peut être toxique pour l'environnement et dangereux en altérant les propriétés du matériau de construction.

Typiquement l'acide organique peut être choisi parmi l'acide benzoïque, l'acide éthanoïque, l'acide méthanoïque, l'acide 3-carboxy-3-hydroxypentanedioïque, l'acide 2-hydroxypropanoïque, l'acide propanoïque, l'acide butanoïque, l'acide pentanoïque, l'acide hexanoïque, l'acide octanoïque, l'acide heptanoïque, l'acide nonanoïque, l'acide décanoïque, l'acide undécanoïque, l'acide dodécanoïque, l'acide tridécanoïque, l'acide tétradécanoïque, l'acide pentadécanoïque, l'acide hexadécanoïque, l'acide heptadécanoïque, l'acide octodécanoïque, l'acide nonadécanoïque, l'acide éicosanoïque, l'acide docosanoïque, l'acide 2-hydroxy-benzoïque, l'acide 2-mercaptopropanoïque et leurs mélanges, en particulier parmi l'acide éthanoïque, l'acide propanoïque et leur mélange, tout particulièrement être l'acide éthanoïque.

Dans certaines circonstances, l'acide organique peut être l'acide pentadécanoïque.

De façon avantageuse, l'utilisation de l'acide éthanoïque permet de limiter la formation des oxyanions, en particulier des oxyanions de molybdène et de soufre. Il permet donc de déterminer de façon adéquate la concentration massique des éléments polluants inorganiques, en particulier la concentration massique du molybdène et du soufre, dans le matériau d'excavation.

Typiquement, le pH du matériau inerté obtenu lors de l'étape a) d'inertage par ajout de l'acide organique peut être compris entre 3 et 9, particulièrement entre 4 et 8, plus particulièrement entre 5 et 6.

De façon avantageuse, un pH dans de telles gammes permet de limiter efficacement, voire d'éviter, la transformation de certains éléments inorganiques en oxyanions.

Typiquement, l'acide organique peut être ajouté au matériau excavé de sorte que le ratio massique entre l'acide organique et le matériau excavé est compris entre 0,1 g/kg et 50 g/kg, en particulier entre 1 g/kg et 40 g/kg, tout particulièrement entre 3 g/kg et 35 g/kg.

De façon avantageuse, un ratio massique dans de telles gammes de valeur permet d'obtenir le pH mentionné ci-dessus et donc de limiter efficacement, voire d'éviter, la transformation de certains éléments inorganiques en oxyanions.

L'homme du métier saura adapter le ratio massique en fonction de l'acide ajouté au matériau excavé.

L'agent complexant est choisi parmi un alcool de sucre, un tensioactif cationique et leur mélange.

A titre d'alcool de sucre on peut citer l'alditol, le sorbitol, le mannitol, le glycérol, le xylitol, le ribitol, le lactitol, le volémitol, l'érythritol, l'arabitol, le maltitol, le galactitol, le thréitol, le glucitol fonctionnalisé, le 1-désoxy-1-(méthylamino)-D-glucitol ou leurs mélanges, en particulier l'alditol, le 1-désoxy-1-(méthylamino)-D-glucitol ou leur mélange, tout particulièrement l'alditol ou le 1-désoxy-1-(méthylamino)-D-glucitol.

Dans certaines circonstances, l'alcool de sucre peut être le lactitol.

Le tensioactif cationique peut être choisi parmi le mésylate de bétaïnate d'oléyle, les amines protonées, les ammoniums quaternaires et leurs mélanges, en particulier être le mésylate de bétaïnate d'oléyle.

Le behentrimonium méthosulfate (BTMS) est un exemple d'ammonium quaternaire qui peut être mis en œuvre dans l'étape a) d'inertage de la méthode de préparation de la présente invention.

Typiquement, l'agent complexant peut être ajouté au matériau excavé de sorte que le ratio massique entre l'agent complexant et le matériau excavé est compris entre 0,01 mg/kg et 20 mg/kg, en particulier entre 0,05 mg/kg et 10 mg/kg, tout particulièrement entre 0,1 mg/kg et 5 mg/kg.

De façon avantageuse, un ratio massique dans de telles gammes permet de complexer efficacement les oxyanions, en particulier des oxyanions de molybdène et de soufre. Il permet donc de limiter, voire d'éviter, leur solubilisation dans l'eau lors de la lixiviation. Il permet également de déterminer de façon adéquate la concentration massique des éléments polluants inorganiques, en particulier la concentration massique du molybdène et du soufre, dans le matériau d'excavation.

L'homme du métier saura adapter le ratio massique en fonction de l'agent complexant ajouté au matériau excavé.

Typiquement, l'acide diaminotétracarboxylique peut être choisi parmi l'acide éthylènediaminetétraacétique (EDTA), l'acide éthylène glycol-bis (β-aminoethyl ether) N,N,N',N' tétra acétique (EGTA), les dérivés de l'EDTA et leurs mélanges, en particulier l'EDTA, l'EGTA et leur mélange, tout particulièrement être EDTA.

L'EDTA permet avantageusement de limiter efficacement, voire d'éviter, la formation des oxyanions et de complexer efficacement les éventuels oxyanions formés, en particulier les oxyanions de molybdène et de soufre, pour éviter leur solubilisation dans l'eau lors de la lixiviation. Il permet donc de déterminer de façon adéquate la concentration massique des éléments polluants inorganiques, en particulier la concentration massique du molybdène et du soufre, dans le matériau d'excavation.

Typiquement, l'acide diaminotétracarboxylique peut être ajouté au matériau excavé de sorte que le ratio massique entre l'acide diaminotétracarboxylique et le matériau excavé peut être compris entre 0,01 mg/kg et 20 mg/kg, en particulier entre 0,1 mg/kg et 10 mg/kg, plus particulièrement entre 0,20 mg/kg et 5 mg/kg.

De façon avantageuse, un ratio massique dans de telles gammes permet d'éviter efficacement la transformation de certains éléments inorganiques en oxyanions et de complexer efficacement les éventuels oxyanions formés pour éviter leur solubilisation dans l'eau lors de la lixiviation.

L'homme du métier saura adapter le ratio massique en fonction de l'acide diaminotétracarboxylique ajouté au matériau excavé.

Selon un premier mode de réalisation particulier, l'étape a) d'inertage est réalisée avec de l'acide éthanoïque et le ratio massique entre l'acide éthanoïque et le matériau d'excavation peut être compris entre 3 g/kg et 35 g/kg.

Selon un deuxième mode de réalisation particulier, l'étape a) d'inertage est réalisée avec de l'EDTA et le ratio massique entre l'EDTA et le matériau d'excavation peut être compris entre 0,2 mg/kg et 2,5 mg/kg.

Selon un troisième mode de réalisation particulier, l'étape a) d'inertage est réalisée avec de 1-désoxy-1-(méthylamino)-D-glucitol et le ratio massique entre 1-désoxy-1-(méthylamino)-D-glucitol et le matériau d'excavation peut être compris entre 0,1 mg/kg et 3,5 mg/kg.

Selon un quatrième mode de réalisation particulier, l'étape a) d'inertage est réalisée avec le mésylate de bétaïnate d'oléyle et le ratio massique entre le mésylate de bétaïnate d'oléyle et le matériau d'excavation peut être compris entre 0,1 mg/kg et 3 mg/kg.

Selon un cinquième mode de réalisation particulier, l'étape a) d'inertage est réalisée avec le BTMS et le ratio massique entre le BTMS et le matériau d'excavation peut être compris entre 0,5 mg/kg et 1,5 mg/kg.

Selon un sixième mode de réalisation particulier, l'étape a) d'inertage est réalisée avec l'EGTA et le ratio massique entre l'EGTA et le matériau d'excavation peut être compris entre 0,5 mg/kg et 25 mg/kg, en particulier entre 4 mg/kg et 6 mg/kg.

Selon un septième mode de réalisation particulier, l'étape a) d'inertage est réalisée avec le lactitol et le ratio massique entre le lactitol et le matériau d'excavation peut être compris entre 0,05 mg/kg et 10 mg/kg, en particulier entre 1 mg/kg et 2 mg/kg.

Selon un huitième mode de réalisation particulier, l'étape a) d'inertage est réalisée avec l'acide pentadécanoïque et le ratio massique entre l'acide pentadécanoïque et le matériau d'excavation peut être compris entre 0,05 g/kg et 1 g/kg, en particulier entre 0,07 g/kg et 0,2 g/kg.

Typiquement, le matériau d'excavation peut avoir subi une étape de préparation avant l'étape a) d'inertage telle qu'une étape de broyage, éventuellement suivi d'une étape de tamisage.

Un avantage de la méthode de préparation selon l'invention telle que définie ci-dessus est que la concentration massique des éléments inorganiques dans un lixiviat obtenu à partir d'un échantillon de matériau inerté est en adéquation avec la concentration massique des éléments inorganiques dans le matériau d'excavation. Le matériau d'excavation peut donc être destiné à être analyser pour déterminer la concentration massique d'un élément polluant inorganique dans le matériau d'excavation.

Ainsi, selon un mode de réalisation, le matériau d'excavation est à analyser et l'étape a) est mise en œuvre sur un échantillon du matériau d'excavation pour obtenir un échantillon de matériau inerté.

De plus, un deuxième objet de l'invention est une méthode de détermination de la concentration massique d'un élément polluant inorganique compris dans un matériau excavé, ladite méthode de détermination comprenant les étapes suivantes :
b) lixiviation d'un échantillon de matériau inerté obtenu lors de l'étape a) d'inertage de la méthode de préparation telle que définie ci-dessus pour obtenir un lixiviat, et
c) détermination de la concentration massique de l'élément polluant inorganique dans le lixiviat.

Au sens de la présente demande, "élément polluant inorganique" désigne un élément inorganique choisi dans les groupes des métaux alcalins, des alcalino-terreux, des lanthanides, des actinides, des métaux de transitions, des métaux pauvres, des métalloïdes, des non-métaux et des halogènes, en particulier des groupes des alcalino-terreux, des métaux de transition, des métaux pauvres, dans les métalloïdes, des non-métaux et des halogènes. Typiquement, l'élément polluant inorganique peut être choisi parmi Al, As, Ba, Ca, Cd, Cl, Cr, Cu, F, Fe, Hg, K, Mg, Mo, Ni, Nb, P, Pb, Rb, S, Sb, Se, Si, Sr, Ti, V, Zn, Zr, en particulier choisi parmi As, Cr, F, Mo, Nb, S, Sb, Se, V, tout particulièrement choisi parmi F, Mo, S, Sb et Se. L'élément polluant inorganique peut être détecté en tant que molécule ou en tant que composé chimique ionique comme les oxyanions, les fluorures et les sulfates.

Lorsque le matériau d'excavation est extrait du sous-sol parisien alors l'élément polluant inorganique peut être choisi parmi le sélénium (Se), le molybdène (Mo), l'antimoine (Sb), le soufre (sous forme de composé chimique ionique sulfates SO₄²⁻) et le fluor (sous forme composé chimique ionique de fluorures F⁻). En effet des analyses récentes du sous-sol parisien ont mis en évidence que la concentration massique des autres éléments polluants inorganiques est très inférieure à la valeur limite I.S.D.I. indiquée dans le Tableau 1.

Selon un premier mode de réalisation de la méthode de détermination selon le deuxième objet de l'invention,
l'étape b) de lixiviation peut comprendre les sous-étapes suivantes :
   b1) extraction solide/liquide de l'échantillon de matériau inerté obtenu lors de l'étape a) d'inertage avec un solvant liquide pour obtenir un mélange comprenant une fraction liquide et une fraction solide,
   b2) filtration de la fraction liquide obtenue lors de l'étape b1) d'extraction pour récupérer une fraction liquide filtrée, et
l'étape c) peut être réalisée en analysant la fraction liquide filtrée récupérée lors de l'étape b2) pour déterminer la concentration massique de l'élément polluant inorganique ;
l'étape b1) étant mise en œuvre à une température T_{extraction} de 65°C à 200°C.

Typiquement l'étape b1) d'extraction est réalisée avec un solvant liquide choisi parmi l'eau, une solution aqueuse, un solvant organique, un solvant inorganique, et leurs mélanges.

Typiquement le solvant organique est un solvant organique volatile, en particulier un solvant organique volatile choisi parmi le méthanol, l'acétone, l'hexane, l'acétonitrile, l'éthanol, un éther, le diméthylsulfoxyde, le 2-hexanone ou leur mélange.

Typiquement, le solvant utilisé peut être de l'eau.

Typiquement, le ratio entre le volume de solvant et la masse sèche de l'échantillon du matériau inerté lors de l'étape b1) d'extraction est de 5 ml/g à 20 ml/g, en particulier de 7 ml/g à 15 ml/g, tout particulièrement de 9,5 ml/g à 10,5 ml/g.

Typiquement, l'échantillon du matériau inerté et/ou le solvant peuvent être chauffés à la température T_{extraction}, puis ils peuvent être mis en contact pour mettre en œuvre l'étape b1) d'extraction.

Typiquement, l'échantillon du matériau inerté peut être mis en contact avec le solvant pour obtenir un mélange, puis ce mélange peut être chauffé jusqu'à la température T_{extraction} pour mettre en œuvre l'étape b1) d'extraction.

Typiquement, l'échantillon du matériau inerté et/ou le solvant peuvent être chauffés à la température T1, inférieure à la température Textraction, puis ils peuvent être mis en contact obtenir un mélange, ce mélange peut être ensuite chauffé jusqu'à la température T_{extraction} de sorte à réaliser l'étape b1) d'extraction.

Typiquement la température T1 peut être de 40°C à 80°C, en particulier de 50°C à 70°C, tout particulièrement de 55°C à 65°C.

Typiquement le solvant et l'échantillon du matériau inerté peuvent être mis en contact de sorte à améliorer la cinétique d'homogénéisation du mélange échantillon/solvant liquide et donc diminuer la durée de l'étape b1) d'extraction.

L'étape b1) d'extraction étant réalisée à T_{extraction}, l'étape b1) peut être réalisée à une pression P_{extraction} afin de garder le solvant sous forme liquide. Typiquement P_{extraction} peut être de 1 bar à 10 bar, en particulier de 1,2 bar à 5 bar, tout particulièrement de 1,6 bar à 2,5 bar.

De façon avantageuse, la réalisation de l'étape b1) d'extraction sous la pression P_{extraction} permet au solvant liquide de s'introduire plus rapidement dans l'échantillon du matériau inerté qu'à 1 bar. De ce fait la durée de l'étape b1) d'extraction est diminuée.

Selon un mode de réalisation, l'échantillon du matériau inerté peut subir avant l'étape b1) d'extraction, une étape de préparation tel qu'une étape de broyage pour obtenir un échantillon broyé et/ou une étape de séchage pour obtenir un échantillon sec.

L'étape de broyage permet de diminuer la granulométrie de l'échantillon du matériau inerté à analyser et d'améliorer son homogénéité, ce qui permet de faciliter l'extraction solide/liquide et donc de réduire la durée de l'étape b1) d'extraction.

Typiquement la granulométrie de l'échantillon broyé peut être inférieure à 1 cm, en particulier de 5 µm à 150 µm, plus particulièrement de 20 µm à 100 µm.

La granulométrie de l'échantillon broyé peut typiquement être déterminée par tamisage.

L'étape de séchage peut permettre de sécher l'échantillon de matériau inerté pour que l'échantillon sec présente typiquement un taux de matière sèche, ou siccité, de 70% à 100%, en particulier de 75% à 90%, tout particulièrement de 78% à 82%.

Au sens de la présente demande, le "taux de matière sèche" est le rapport entre la masse sèche de l'échantillon sec et la masse de l'échantillon de matériau inerté avant séchage, la masse sèche de l'échantillon sec étant mesurée après séchage d'environ 30 grammes d'échantillon de matériau inerté pendant 30 minutes à 130°C.

Typiquement, l'étape b1) d'extraction est réalisée dans un réacteur comprenant :
- une chambre d'extraction adaptée pour recevoir l'échantillon du matériau inerté
- deux ports d'entrée de liquide et un port de sortie de liquide,
dans lequel
les deux ports d'entrée de liquide sont fluidiquement connectés à la chambre d'extraction et positionnés de part et d'autre de la chambre d'extraction, et le port de sortie de liquide est fluidiquement connecté à la chambre d'extraction.

Au sens de la présente invention, on entend par "port d'entrée de liquide" tout élément adapté à introduire le solvant dans la chambre d'extraction du réacteur.

Au sens de la présente invention, on entend par "port de sortie de liquide" tout élément adapté à extraire la fraction liquide de la chambre d'extraction du réacteur.

La position des deux ports d'entrée de liquide, de part et d'autre de la chambre d'extraction, permet d'améliorer l'homogénéité du mélange échantillon/solvant. De façon avantageuse, ceci permet de faciliter l'extraction solide/liquide et donc de réduire la durée de l'étape b1) d'extraction.

La fraction liquide obtenue lors de l'étape b1) d'extraction comprend le ou les polluants inorganiques compris dans l'échantillon du matériau inerté. L'analyse de cette fraction liquide permet de déterminer la concentration massique de chacun des éléments polluants inorganiques contenus dans l'échantillon du matériau d'excavation.

Typiquement l'étape b2) de filtration est réalisée à l'aide d'un filtre.

Au sens de la présente invention, on entend par "filtre" tout élément à travers lequel la fraction liquide peut passer et retenir la fraction solide.

Typiquement le matériau du filtre est choisi parmi une membrane de filtration, de la fibre de verre, la cellulose, le PTFE, du nylon, PMMA, PE, matériaux sulfonés, matériaux acryliques, matériaux fluorés en particulier la cellulose.

Le matériau du filtre peut être hydrophile ou hydrophobe. Selon un mode de réalisation particulier le matériau du filtre est hydrophile.

Typiquement, le filtre présente une porosité inférieure à 100 µm, en particulier inférieure à 75 µm, plus particulièrement inférieure à 55 µm.

Le filtre peut comprendre plusieurs filtres de porosités différentes.

Selon un mode de réalisation, le filtre peut comprendre :
- deux filtres d'une même porosité et inférieure à 100 µm, en particulier inférieure à 75 µm, plus particulièrement inférieure à 55 µm, et
un troisième filtre, entre ces deux filtres, d'une porosité différente et comprise entre 0,1 µm et 5 µm, en particulier entre 0,2 µm et 1 µm, plus particulièrement entre 0,25 µm et 0,35µm.

Typiquement le ratio entre le volume de l'échantillon du matériau d'excavation et la surface de filtration du filtre est inférieur à 10 cm, en particulier de 0,1 cm à 5 cm, tout particulièrement de 0,5 cm à 1 cm.

De façon avantageuse, le filtre ne colmate pas lors de l'étape b2) de filtration lorsque le ratio entre le volume de matériau d'excavation et la surface de filtration du filtre est compris dans les plages ci-dessus.

Typiquement l'étape b2) de filtration est réalisée en appliquant une surpression au mélange comprenant la fraction liquide et la fraction solide pour forcer ladite fraction liquide à travers le filtre, ou en appliquant une dépression au mélange comprenant la fraction liquide et la fraction solide pour aspirer ladite fraction liquide à travers le filtre, en particulier en appliquant une surpression.

L'homme du métier sait s'il doit appliquer une surpression ou une dépression au mélange comprenant une fraction liquide et une fraction solide pour réaliser l'étape b2) de filtration.

Typiquement, la surpression appliquée au mélange est supérieure à 1 bar, en particulier à 1,2 bar à 5 bar, tout particulièrement de 1,6 bar à 2.5 bar.

Typiquement, la dépression appliquée au mélange est inférieure à 1 bar, en particulier de 0,2 bar à 0,5 bar.

Selon un mode de réalisation très particulier, l'étape b2) de filtration est réalisée sous vide.

Bien que la durée de filtration dépende des paramètres décrits ci-dessus elle est typiquement inférieure à 10 minutes.

Lorsque l'étape b1) d'extraction est réalisée dans le réacteur décrit ci-dessus, le filtre est positionné dans ledit réacteur de sorte que le port de sortie de liquide est fluidiquement connecté à la chambre d'extraction à travers le filtre.

Typiquement la fraction liquide filtrée peut être analysée lors de l'étape c) d'analyse par dosage par chromatographie ionique en phase liquide, par dosage colorimétrique, par dosage potentiométrique, par dosage pH-métrique, par spectrométrie d'absorption, par spectrométrie d'émission atomique avec plasma à couplage inductif (ICP-AES), par spectrométrie de masse avec plasma à couplage inductif (ICP-MS), par spectrométrie d'ionisation de flamme (FID), par spectrométrie d'émission de flamme, par spectrophotométrie UV, en particulier par dosage par chromatographie ionique en phase liquide, par dosage potentiométrique, par spectrométrie de masse avec plasma à couplage inductif (ICP-MS).

L'homme du métier saura choisir la technique d'analyse à mettre en œuvre en fonction de l'élément polluant inorganique dont il souhaite déterminer la concentration massique.

Selon un mode de réalisation particulier, la concentration massique des métaux, tels que le molybdène, le sélénium et l'antimoine est déterminée par spectrométrie d'émission atomique avec plasma à couplage inductif (ICP-AES) et/ou spectrométrie de masse avec plasma à couplage inductif (ICP-MS), en particulier la spectrométrie d'émission atomique avec plasma à couplage inductif (ICP-AES) selon la norme NF EN ISO 11885 et/ou la spectrométrie de masse avec plasma à couplage inductif (ICP-MS) selon la norme NF EN ISO 17294-2.

Selon un mode de réalisation particulier, la concentration massique des anions tels que les anions bromure, chlorure, fluorure, nitrate, nitrite, orthophosphate et sulfate peut être déterminée par spectrophotométrie UV et/ou par dosage par chromatographie ionique en phase liquide, en particulier par spectrophotométrie UV selon la norme NF ISO 15923-1 et/ou dosage par chromatographie ionique en phase liquide selon la norme NF EN ISO 10304-1.

Selon un mode de réalisation particulier, la concentration massique de l'ion fluorure peut être déterminée par dosage potentiométrique, en particulier le dosage potentiométrique selon la norme NF T90-004.

La spectrométrie d'émission atomique avec plasma à couplage inductif (ICP-AES) selon la norme NF EN ISO 11885, la spectrométrie de masse avec plasma à couplage inductif (ICP-MS) selon la norme NF EN ISO 17294-2, la spectrophotométrie UV selon la norme NF ISO 15923-1, le dosage par chromatographie ionique en phase liquide selon la norme NF EN ISO 10304-1 et le dosage potentiométrique selon la norme NF T90-004 sont les techniques d'analyse listées dans la norme française NF EN 16192 pour déterminer la concentration massique de chacun des éléments polluants inorganiques contenus dans les matériaux d'excavation.

Lorsque ces techniques d'analyse sont mises en œuvre dans l'étape c) d'analyse de la fraction liquide filtrée alors cette étape d'analyse est similaire à celle de la norme française NF EN 16192, i.e. 60 minutes.

De façon avantageuse, la méthode de détermination selon le premier mode de réalisation, appelée lixiviation accélérée, permet donc de déterminer en quelques minutes chacun des éléments polluants inorganiques contenus dans un échantillon de matériau d'excavation directement sur le site d'extraction des matériaux d'excavation. De plus, les présents inventeurs ont trouvé que les concentrations massiques déterminées par la méthode de détermination selon le premier mode de réalisation étaient corrélables aux concentrations massiques déterminées selon les techniques d'analyse listées dans la norme française NF EN 16192.

Selon un second mode de réalisation de la méthode de détermination selon le deuxième objet de l'invention, l'étape b) peut être réalisée selon la norme française NF EN 12457-2 (1^{er} décembre 2002) et l'étape c) peut être réalisée selon la norme française NF EN 16192 (01 mars 2020).

De façon avantageuse, les résultats obtenus par la méthode de détermination selon le premier mode de réalisation et par la méthode de détermination selon le second mode de réalisation sont du même ordre de grandeur. Cependant, la méthode de détermination selon le premier mode de réalisation permet d'obtenir des résultats plus rapidement que la méthode de détermination selon le second mode de réalisation.

Un autre avantage de la méthode de préparation selon l'invention telle que définie ci-dessus est d'éviter le relargage des éléments polluants inorganiques du matériau d'excavation lors du stockage dudit matériau d'excavation.

Ainsi, un troisième objet de l'invention est une méthode de stockage d'un matériau d'excavation comprenant une étape de stockage du matériau inerté obtenu lors de l'étape a) d'inertage de la méthode de préparation selon l'invention telle que définie.

En fonction de la concentration en éléments polluants inorganiques compris dans le matériau d'excavation, le matériau inerté peut être stocké dans une Installation de Stockage de Déchets Inertes, une Installation de Stockage de Déchets non Dangereux, une Installation de Stockage de Déchets Dangereux. L'installation de stockage peut être choisie grâce à la méthode de détermination telle que définie ci-dessus.

L'étape de stockage dépend de l'installation dans lequel le matériau inerté est stocké. Ainsi l'étape de stockage peut être adaptée à un stockage dans une Installation de Stockage de Déchets Inertes, dans une Installation de Stockage de Déchets non Dangereux ou dans une Installation de Stockage de Déchets Dangereux, en particulier dans une Installation de Stockage de Déchets Dangereux.

Le stockage de matériau dans une de ces trois installations est connu de l'homme du métier. Il saura donc mettre en œuvre l'étape de stockage.

Un autre avantage de la méthode de préparation selon l'invention telle que définie ci-dessus est d'éviter le relargage des éléments polluants inorganiques du matériau d'excavation lors de la valorisation dudit matériau d'excavation en tant que matériau de construction.

Un quatrième objet de l'invention est donc une méthode de valorisation d'un matériau d'excavation comprenant une étape de valorisation du matériau inerté obtenu lors de l'étape a) d'inertage de la méthode de préparation selon l'invention telle que définie ci-dessus en tant que matériau de construction.

Typiquement, le matériau de construction peut être un remblai ou un granulat, en particulier un remblai, un granulat pour béton ou un granulat pour enrobé.

Au sens de la présente demande, "remblai" désigne un matériau de construction destiné à élever un terrain, combler un creux ou combler les vides de l'exploitation minière.

Au sens de la présente demande, "granulat" désigne un matériau de construction utilisé pour la réalisation d'ouvrages de Génie Civil, de travaux routiers et de bâtiments.

Un granulat pour béton et un granulat pour enrobé sont des exemples de granulat.

Au sens de la présente demande, "granulat pour enrobé" désigne un granulat utilisé pour la confection du bitume.

Au sens de la présente demande, "granulat pour béton" désigne un granulat utilisé pour la confection des bétons.

L'étape de valorisation peut comprendre une étape de production d'un matériau de construction à partir du matériau inerté.

Typiquement l'étape de production peut comprendre une ou des sous-étapes de mise en forme du matériau inerté, la ou les sous-étapes étant adaptées au matériau de construction, en particulier au remblai ou au granulat, plus particulièrement au remblai, au granulat pour béton ou au granulat pour enrobé.

Le choix du matériau de construction dépend de la concentration en éléments polluants inorganiques compris dans le matériau d'excavation. Ainsi l'étape de production, la ou les sous-étapes de mise en forme du matériau inerté peuvent être choisies grâce à la méthode de détermination telle que définie ci-dessus.

L'invention va être décrite plus en détail à l'aide des exemples suivants donnés à titre d'illustration seulement.

### Exemples

Les Exemples 1 à 8 illustrent les résultats obtenus lors de la détermination de la concentration massique en soufre (S, sous forme de composé chimique ionique sulfates SO₄²⁻) selon les méthodes de l'invention dans des boues d'excavation ayant subi différentes étapes d'inertage selon l'invention.

Les Exemples 1 à 8 mettent en évidence que la concentration massique en soufre (S, sous forme de composé chimique ionique sulfates SO₄²⁻) dans le lixiviat des échantillons inertés est plus en adéquation avec la concentration massique réelle en soufre de ces échantillons que la concentration massique en soufre dans le lixiviat de l'échantillon non inerté.

### Exemple 1 : EDTA.

Trois échantillons de boues séchées, broyées et tamisées sont analysés par spectrométrie à fluorescence à rayons X pour déterminer la concentration massique réelle en soufre de ces échantillons. Les analyses ont été réalisées avec le spectromètre portable ThermoFisher XL3T GOLD. La source de rayons X est en argent, et les électrons sont accélérés par une tension de 50 kV. 5 g de chacun des échantillons ont été analysés, sous air, pendant 15 minutes par filtre entre 0 et 20 keV. Le temps total d'acquisition est de 30 min.

De l'EDTA est ensuite ajouté à deux des trois échantillons selon les ratios indiqués dans le Tableau 2 ci-dessous, le mélange obtenu est ensuite homogénéisé. L'EDTA n'est pas ajouté au troisième échantillon (exemple comparatif).
Chacun des trois échantillons est ensuite analysé par lixiviation accélérée selon le protocole suivant :
Une masse connue (environ 30 g) d'un mélange est séchée à 130°C pendant 30 minutes pour déterminer la matière sèche dudit échantillon.
On ajoute une masse d'échantillon équivalente à 4 g de matière sèche de cet échantillon dans un cylindre Q-Cup de l'appareil Extraction Dispersive Énergisée Guidée (EDGE) de CEM. Le cylindre Q-Cup est équipé d'une superposition de trois filtres Q-Disc : Un filtre Q-Disc C9 en cellulose hydrophile et dont la porosité est de 55µm, un filtre Q-Disc G1 en fibres de verres et dont la porosité est de 0,3 µm et d'un second filtre Q-Disc C9.
L'échantillon est ensuite chauffé à la température T₁ de 60°C puis le solvant, qui est de l'eau, est introduit dans le cylindre Q-cup de part et d'autre de l'échantillon.
Le mélange est ensuite chauffé à la température T_{extraction} de 100°C. Cette température T_{extraction} est maintenue pendant 30 secondes. L'extraction dure donc 30 secondes.
Après les 30 secondes, le mélange n'est plus chauffé de sorte que la température du mélange diminue. La fraction liquide est ensuite filtrée à travers le filtre Q-Disc par application d'une surpression de 2,2 bar dans le cylindre Q-Cup.
La fraction liquide filtrée est ensuite analysé par dosage par chromatographie ionique en phase liquide selon la norme NF EN ISO 10304-1 pour déterminer la concentration massique en soufre. Cette technique d'analyse est listée dans la norme française NF EN 16192.

**[Tableau 2]**

| Concentration massique réelle en soufre (sous forme de sulfate) déterminée par spectrométrie à fluorescence à rayons X | Concentration massique en soufre (sous forme de sulfate) déterminée par lixiviation accélérée |
|---|---|
| 395 mg/kg | 1140 mg/kg |
| | (Exemple comparatif : pas d'ajout d'EDTA) |
| 514 mg/kg | 669 mg/kg (Ratio massique EDTA/boue : 0,55 mg/kg) |
| 405 mg/kg | 413 mg/kg (Ratio massique EDTA/boue : 2,22 mg/kg) |

Le Tableau 2 met en évidence que l'ajout de l'EDTA permet de réduire fortement l'écart entre la concentration massique réelle en soufre déterminée par spectrométrie à fluorescence à rayons X et la concentration massique en soufre déterminée par lixiviation accélérée. En effet, l'écart est de 188% sans ajout d'EDTA alors qu'il peut être égal à 2% avec l'ajout d'EDTA.

### Exemple 2 : Acide éthanoïque

Le protocole opératoire est identique à celui de l'Exemple 1, les différences étant que l'EDTA est remplacé par l'acide éthanoïque et que les ratios acide éthanoïque/boues ont été adaptés comme indiqué dans le Tableau 3 ci-dessous.

Le Tableau 3 met en évidence que l'acide éthanoïque permet de réduire fortement l'écart entre la concentration massique réelle en soufre déterminée par spectrométrie à fluorescence à rayons X et la concentration massique en soufre déterminée par lixiviation accélérée. En effet, l'écart est de 50% sans ajout d'acide éthanoïque alors qu'il peut être d'environ 10% avec l'ajout d'acide éthanoïque.

**[Tableau 3]**

| Concentration massique en soufre (sous forme de sulfate) déterminée par spectrométrie à fluorescence à rayons X | Concentration massique en soufre (sous forme de sulfate) déterminée par lixiviation accélérée |
|---|---|
| 328 mg/kg | 487 mg/kg |
| | (Exemple comparatif : Pas d'ajout d'acide éthanoïque) |
| 604 mg/kg | 555 mg/kg (Ratio massique acide éthanoïque/boue : 3,3 g/kg, pH du mélange : 5,50) |
| 382 mg/kg | 346 mg/kg (Ratio massique acide éthanoïque /boue : 19 g/kg, pH du mélange : 5,15) |

### Exemple 3 : alcool de sucre, le 1-désoxy-1-(méthylamino)-D-glucitol

Le protocole opératoire est similaire à celui de l'Exemple 1, les différences étant que l'EDTA est remplacé par le 1-désoxy-1-(méthylamino)-D-glucitol et que les ratios massiques 1-désoxy-1-(méthylamino)-D-glucitol/boue ont été adaptés comme indiqué dans le Tableau 4 ci-dessous.

**[Tableau 4]**

| Concentration massique en soufre (sous forme de sulfate) déterminée par spectrométrie à fluorescence à rayons X | Concentration massique en soufre (sous forme de sulfate) déterminée par lixiviation accélérée |
|---|---|
| 395 mg/kg | 1140 mg/kg |
| | (Exemple comparatif : Pas d'ajout d'alcool de sucre) |
| 400 mg/kg | 655 mg/kg (Ratio massique alcool de sucre /boue : 0,75 mg/kg |
| 440 mg/kg | 541 mg/kg (Ratio massique alcool de sucre /boue : 1,50 mg/kg) |

Le Tableau 4 met en évidence que le 1-désoxy-1-(méthylamino)-D-glucitol permet de réduire fortement l'écart entre la concentration massique réelle en soufre déterminée par spectrométrie à fluorescence à rayons X et la concentration massique en soufre déterminée par lixiviation accélérée. En effet, l'écart est de 188% sans ajout du 1-désoxy-1-(méthylamino)-D-glucitol, par contre il peut être inférieur à 25% avec l'ajout du 1-désoxy-1-(méthylamino)-D-glucitol.

### Exemple 4 : tensioactif cationique, mésylate de bétaïnate d'oléyle

Le protocole opératoire est similaire à celui de l'Exemple 1, les différences étant que l'EDTA est remplacé par le mésylate de bétaïnate d'oléyle et que les ratios massiques le mésylate de bétaïnate d'oléyle /boue ont été adaptés comme indiqué dans le Tableau 5 ci-dessous.

**[Tableau 5]**

| Concentration massique en soufre (sous forme de sulfate) déterminée par spectrométrie à fluorescence à rayons X | Concentration massique en soufre (sous forme de sulfate) déterminée par lixiviation accélérée |
|---|---|
| 395 mg/kg | 1140 mg/kg |
| | (Exemple comparatif : Pas d'ajout de mésylate de bétaïnate d'oléyle) |
| 430 mg/kg | 620 mg/kg (Ratio massique mésylate de bétaïnate d'oléyle /boue : 0,1 mg/kg) |
| 427 mg/kg | 586 mg/kg (Ratio massique mésylate de bétaïnate d'oléyle /boue : 0,3mg/kg) |
| 426 mg/kg | 506 mg/kg (Ratio massique mésylate de bétaïnate d'oléyle /boue : 0,6 mg/kg) |
| 434 mg/kg | 465 mg/kg (Ratio massique mésylate de bétaïnate d'oléyle /boue : 0,7mg/kg) |
| 424 mg/kg | 402 mg/kg (Ratio massique mésylate de bétaïnate d'oléyle /boue : 2,7 mg/kg) |

Le Tableau 5 met en évidence que le mésylate de bétaïnate d'oléyle permet de réduire fortement l'écart entre la concentration massique réelle en soufre déterminée par spectrométrie à fluorescence à rayons X et la concentration massique en soufre déterminée par lixiviation accélérée. En effet, l'écart est de 188% sans ajout du mésylate de bétaïnate d'oléyle, par contre il peut être inférieur à 10% avec l'ajout du mésylate de bétaïnate d'oléyle.

### Exemple 5 : EGTA

Le protocole opératoire est similaire à celui de l'Exemple 1, les différences étant que l'EDTA est remplacé par l'EGTA et que les ratios massiques EGTA/boue ont été adaptés comme indiqué dans le Tableau 6 ci-dessous.

Le Tableau 6 met en évidence que l'EGTA permet de réduire fortement l'écart entre la concentration massique réelle en soufre déterminée par spectrométrie à fluorescence à rayons X et la concentration massique en soufre déterminée par lixiviation accélérée. En effet, l'écart est de 40% sans ajout de l'EGTA, par contre il est d'environ 11% avec l'ajout de l'EGTA.

**[Tableau 6]**

| Concentration massique en soufre (sous forme de sulfate) déterminée par spectrométrie à fluorescence à rayons X | Concentration massique en soufre (sous forme de sulfate) déterminée par lixiviation accélérée |
|---|---|
| 440 mg/kg | 747 mg/kg |
| | (Exemple comparatif : Pas d'ajout d'EGTA) |
| 495 mg/kg | 556 mg/kg (Ratio massique EGTA/boue : 5,55 mg/kg) |

### Exemple 6 : tensioactif cationique, behentrimonium méthosulfate (BTMS)

Le protocole opératoire est similaire à celui de l'Exemple 1, les différences étant que l'EDTA est remplacé par le BTMS et que le ratio massique BTMS/boue a été adapté comme indiqué dans le Tableau 7 ci-dessous.

Le Tableau 7 met en évidence que le BTMS permet de réduire l'écart entre la concentration massique réelle en soufre déterminée par spectrométrie à fluorescence à rayons X et la concentration massique en soufre déterminée par lixiviation accélérée. En effet, l'écart est de 40% sans ajout du BTMS, par contre il est d'environ 16% avec l'ajout du BTMS.

**[Tableau 7]**

| Concentration massique en soufre (sous forme de sulfate) déterminée par spectrométrie à fluorescence à rayons X | Concentration massique en soufre (sous forme de sulfate) déterminée par lixiviation accélérée |
|---|---|
| 440 mg/kg | 747 mg/kg |
| | (Exemple comparatif : Pas d'ajout de BTMS) |
| 498 mg/kg | 591 mg/kg (Ratio massique BTMS/boue : 0,38 mg/kg) |

### Exemple 7 : alcool de sucre, le lactitol

Le protocole opératoire est similaire à celui de l'Exemple 1, les différences étant que l'EDTA est remplacé par le lactitol et que le ratio massique lactitol/boue a été adapté comme indiqué dans le Tableau 8 ci-dessous.

Le Tableau 8 met en évidence que le lactitol permet de réduire fortement l'écart entre la concentration massique réelle en soufre déterminée par spectrométrie à fluorescence à rayons X et la concentration massique en soufre déterminée par lixiviation accélérée. En effet, l'écart est de 40% sans ajout du lactitol, par contre il est d'environ 1% avec l'ajout du lactitol.

**[Tableau 8]**

| Concentration massique en soufre (sous forme de sulfate) déterminée par spectrométrie à fluorescence à rayons X | Concentration massique en soufre (sous forme de sulfate) déterminée par lixiviation accélérée |
|---|---|
| 440 mg/kg | 747 mg/kg |
| | (Exemple comparatif : Pas d'ajout de lactitol) |
| 470 mg/kg | 475 mg/kg (Ratio massique lactitol/boue : 1,5 mg/kg |

### Exemple 8 : acide pentadécanoïque

Le protocole opératoire est similaire à celui de l'Exemple 1, les différences étant que l'EDTA est remplacé par l'acide pentadécanoïque et que le ratio massique acide pentadécanoïque/boue a été adapté comme indiqué dans le Tableau 9 ci-dessous.

Le Tableau 9 met en évidence que l'acide pentadécanoïque permet de réduire fortement l'écart entre la concentration massique réelle en soufre déterminée par spectrométrie à fluorescence à rayons X et la concentration massique en soufre déterminée par lixiviation accélérée. En effet, l'écart est de 40% sans ajout de l'acide pentadécanoïque, par contre il est d'environ 1% avec l'ajout de l'acide pentadécanoïque.

**[Tableau 9]**

| Concentration massique en soufre (sous forme de sulfate) déterminée par spectrométrie à fluorescence à rayons X | Concentration massique en soufre (sous forme de sulfate) déterminée par lixiviation accélérée |
|---|---|
| 440 mg/kg | 747 mg/kg |
| | (Exemple comparatif : Pas d'ajout d' acide pentadécanoïque) |
| 498 mg/kg | 502 mg/kg (Ratio massique acide pentadécanoïque/boue : 0,1 g/kg |

## Revendications

1. Méthode de préparation d'un matériau d'excavation comprenant l'étape suivante :
a) inertage du matériau d'excavation pour obtenir un matériau inerté ;
l'étape a) étant réalisée par ajout d'un acide organique, d'un agent complexant, ou d'un acide diaminotétracarboxylique au matériau d'excavation,
l'agent complexant étant choisi parmi un alcool de sucre, un agent tensioactif cationique et leur mélange.

2. Méthode de préparation selon la revendication 1 dans laquelle l'acide organique est choisi parmi l'acide benzoïque, l'acide éthanoïque, l'acide méthanoïque, l'acide 3-carboxy-3-hydroxypentanedioïque, l'acide 2-hydroxypropanoïque, l'acide propanoïque, l'acide butanoïque, l'acide pentanoïque, l'acide hexanoïque, l'acide octanoïque, l'acide heptanoïque, l'acide nonanoïque, l'acide décanoïque, l'acide undécanoïque, l'acide dodécanoïque, l'acide tridécanoïque, l'acide tétradécanoïque, l'acide pentadécanoïque, l'acide hexadécanoïque, l'acide heptadécanoïque, l'acide octodécanoïque, l'acide nonadécanoïque, l'acide éicosanoïque, l'acide docosanoïque, l'acide 2-hydroxy-benzoïque, l'acide 2-mercaptopropanoïque et leurs mélanges.

3. Méthode de préparation selon la revendication 1 dans laquelle l'acide diaminotétracarboxylique est choisi parmi l'acide éthylènediaminetétraacétique (EDTA), l'acide éthylène glycol-bis (β-aminoethyl ether) N,N,N',N' tétra acétique (EGTA), les dérivés de l'acide éthylènediaminetétraacétique (EDTA) et leurs mélanges.

4. Méthode de préparation selon la revendication 1 dans laquelle l'alcool de sucre est choisi parmi l'alditol, le sorbitol, le mannitol, le glycérol, le xylitol, le ribitol, le lactitol, le volémitol, l'érythritol, l'arabitol, le maltitol, le galactitol, le thréitol, le glucitol fonctionnalisé, le 1-désoxy-1-(méthylamino)-D-glucitol et leurs mélanges.

5. Méthode de préparation selon la revendication 1 dans laquelle l'agent tensioactif cationique est choisi parmi le mésylate de bétaïnate d'oléyle, les amines protonées, les ammoniums quaternaires et leurs mélanges.

6. Méthode de préparation selon l'une quelconques des revendications 1 à 5 dans lequel matériau d'excavation est à analyser et l'étape a) est mise en œuvre sur un échantillon du matériau d'excavation pour obtenir un échantillon de matériau inerté.

7. Méthode de détermination de la concentration massique d'un élément polluant inorganique compris dans un matériau excavé, ladite méthode de détermination comprenant les étapes suivantes :
b) lixiviation d'un échantillon de matériau inerté obtenu lors de l'étape a) d'inertage de la méthode de préparation telle que définie dans la revendication 6 pour obtenir un lixiviat, et
c) détermination de la concentration massique de l'élément polluant inorganique dans le lixiviat.

8. Méthode de détermination selon la revendication 7 dans laquelle :
l'étape b) de lixiviation comprend les sous-étapes suivantes :
b1) extraction solide/liquide de l'échantillon de matériau inerté obtenu lors de l'étape a) d'inertage avec un solvant liquide pour obtenir un mélange comprenant une fraction liquide et une fraction solide,
b2) filtration de la fraction liquide obtenue lors de l'étape b1) d'extraction pour récupérer une fraction liquide filtrée, et
l'étape c) est réalisée en analysant la fraction liquide filtrée récupérée lors de l'étape b2) pour déterminer la concentration massique de l'élément polluant inorganique ;
l'étape b1) étant mise en œuvre à une température T_{extraction} de 65°C à 200°C.

9. Méthode de détermination selon la revendication 7 et/ou 8 dans laquelle l'étape b) est réalisée selon la norme française NF EN 12457-2 (1^{er} décembre 2002) et l'étape c) est réalisée selon la norme française NF EN 16192 (1^{er} mars 2020).

10. Méthode de stockage d'un matériau d'excavation comprenant une étape de stockage du matériau inerté obtenu lors de l'étape a) d'inertage de la méthode de préparation telle que définie dans l'une quelconque des revendications 1 à 5.

11. Méthode de stockage selon la revendication 10 dans laquelle l'étape de stockage est adaptée à un stockage dans une Installation de Stockage de Déchets Inertes, dans une Installation de Stockage de Déchets non Dangereux ou dans une Installation de Stockage de Déchets Dangereux.

12. Méthode de valorisation d'un matériau d'excavation comprenant une étape de valorisation du matériau inerté obtenu lors de l'étape a) d'inertage de la méthode de préparation telle que définie dans l'une quelconque des revendications 1 à 5 en tant que matériau de construction.

13. Méthode selon la revendication 12 dans lequel le matériau de construction est un remblai ou un granulat.

14. Méthode selon la revendication 12 ou la revendication 13 dans laquelle l'étape de valorisation comprend une étape de production d'un matériau de construction à partir du matériau inerté.

15. Méthode selon la revendication 14 dans laquelle l'étape de production comprend une ou des sous-étapes de mise en forme du matériau inerté, la ou les sous-étapes étant adaptées au matériau de construction.

## Patentansprüche

1. Verfahren zur Aufbereitung eines Aushubmaterial, welches den folgenden Schritt umfasst:
a) Inertisieren des Aushubmaterials, um ein inertisiertes Material zu erhalten; wobei Schritt a) durch Zugabe einer organischen Säure, eines Komplexierungsmittels oder einer Diaminotetracarbonsäure zum Aushubmaterial durchgeführt wird,
wobei das Komplexierungsmittel aus einem Zuckeralkohol, einem kationischen Tensid und deren Mischung gewählt wird.

2. Aufbereitungsverfahren nach Anspruch 1, wobei die organische Säure gewählt ist aus Benzoesäure, Ethansäure, Methansäure, 3-Carboxy-3-hydroxypentandisäure, 2-Hydroxypropansäure, Propansäure, Butansäure, Pentansäure, Hexansäure, Octansäure, Heptansäure, Nonansäure, Decansäure, Undecansäure, Dodecansäure, Tridecansäure, Tetradecansäure, Pentadecansäure, Hexadecansäure, Heptadecansäure, Octadecansäure, Nonadecansäure, Eicosansäure, Docosansäure, 2-Hydroxybenzoesäure, 2-Mercaptopropionsäure und deren Mischungen.

3. Aufbereitungsverfahren nach Anspruch 1, wobei die Diaminotetracarbonsäure gewählt ist aus Ethylendiamintetraessigsäure (EDTA), Ethylenglykol-bis-(ß-aminoethylether) N,N,N',N'-tetraessigsäure (EGTA), Derivate der Ethylendiamintetraessigsäure (EDTA) und deren Mischungen.

4. Aufbereitungsverfahren nach Anspruch 1, wobei der Zuckeralkohol gewählt ist aus Aldit, Sorbit, Mannit, Glycerin, Xylit, Ribit, Lactit, Volemit, Erythrit, Arabit, Maltit, Galactit, Threit, funktionalisiertes Glucitol, 1-Desoxy-1-(methylamino)-D-glucitol und deren Mischungen.

5. Aufbereitungsverfahren nach Anspruch 1, wobei das kationische Tensid gewählt ist aus Oleylbetainmesylat, protonierten Aminen, quaternären Ammoniumverbindungen und deren Mischungen.

6. Aufbereitungsverfahren nach einem der Ansprüche 1 bis 5, wobei Aushubmaterial zu analysieren ist und der Schritt a) an einer Probe des Aushubmaterials durchgeführt wird, um eine inertisierte Materialprobe zu erhalten.

7. Verfahren zur Bestimmung der Massenkonzentration eines anorganischen Schadstoffelements, das in einem Aushubmaterial enthalten ist, wobei das Bestimmungsverfahren die folgenden Schritte umfasst:
b) Auswaschung einer in dem Inertisierungsschritt a) des Aufbereitungsverfahrens nach Anspruch 6 erhaltenen inertisierten Materialprobe, um ein Sickerwasser zu erhalten, und
c) Bestimmen der Massenkonzentration des anorganischen Schadstoffs in dem Sickerwasser.

8. Bestimmungsverfahren nach Anspruch 7, wobei:
der Schritt b) des Auswaschens die folgenden Teilschritte umfasst:
b1) Fest-/Flüssig-Extraktion der in dem Inertisierungsschritt a) erhaltenen inertisierten Materialprobe mit einem flüssigen Lösungsmittel, um eine Mischung zu erhalten, die eine flüssige Fraktion und eine feste Fraktion umfasst,
b2) Filtration der in dem Extraktionsschritt b1) zum Erhalt einer filtrierten flüssigen Fraktion erhaltenen flüssigen Fraktion, und
wobei Schritt c) durchgeführt wird, indem die im Schritt b2) erhaltene filtrierte flüssige Fraktion analysiert wird, um die Massenkonzentration des anorganischen Schadstoffelements zu bestimmen;
wobei Schritt b1) bei einer Temperatur T_{Extraktion} von 65 °C bis 200 °C durchgeführt wird.

9. Bestimmungsverfahren nach Anspruch 7 und/oder 8, wobei Schritt b) gemäß der französischen Norm **NF EN** 12457-2 (1. Dezember 2002) und Schritt c) gemäß der französischen Norm **NF EN** 16192 (1. März 2020) durchgeführt wird.

10. Verfahren zur Lagerung von Aushubmaterial, das einen Schritt der Lagerung des in dem Inertisierungsschritt a) des Aufbereitungsverfahrens nach einem der Ansprüche 1 bis 5 erhaltenen inertisierten Materials umfasst.

11. Verfahren zur Lagerung nach Anspruch 10, wobei der Lagerungsschritt für die Lagerung in einer Inertstoffdeponie, in einer Deponie für nicht gefährliche Abfälle oder in einer Deponie für gefährliche Abfälle ausgebildet ist.

12. Verfahren zur Verwertung von Aushubmaterial, das einen Schritt zur Verwertung des in dem Inertisierungsschritt a) des Aufbereitungsverfahrens nach einem der Ansprüche 1 bis 5 erhaltenen inertisierten Materials als Baumaterial umfasst.

13. Verfahren nach Anspruch 12, wobei das Baumaterial ein Aufschüttungsmaterial oder ein Granulat ist.

14. Verfahren nach Anspruch 12 oder Anspruch 13, wobei der Verwertungsschritt einen Schritt zur Herstellung eines Baumaterials aus dem inertisierten Material umfasst.

15. Verfahren nach Anspruch 14, wobei der Herstellungsschritt einen oder mehrere Teilschritte zur Formgebung des inertisierten Materials umfasst, wobei der oder die Teilschritte an das Baumaterial angepasst sind.

## Claims

1. Method of preparation of an excavation material comprising the following step:
a) inerting the excavation material in order to obtain an inerted material;
step a) being carried out by addition of an organic acid, of a complexing agent or of a diaminotetracarboxylic acid to the excavation material,
the complexing agent being chosen from a sugar alcohol, a cationic surface-active agent and their mixtures.

2. Method of preparation according to Claim 1, in which the organic acid is chosen from benzoic acid, ethanoic acid, methanoic acid, 3-carboxy-3-hydroxypentanedioic acid, 2-hydroxypropanoic acid, propanoic acid, butanoic acid, pentanoic acid, hexanoic acid, octanoic acid, heptanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, docosanoic acid, 2-hydroxybenzoic acid, 2-mercaptopropanoic acid and their mixtures.

3. Method of preparation according to Claim 1, in which the diaminotetracarboxylic acid is chosen from ethylenediaminetetraacetic acid (EDTA), ethylene glycol-bis(β-aminoethyl ether)-N,N,N',N'-tetraacetic acid (EGTA), ethylenediaminetetraacetic acid (EDTA) derivatives and their mixtures.

4. Method of preparation according to Claim 1, in which the sugar alcohol is chosen from alditol, sorbitol, mannitol, glycerol, xylitol, ribitol, lactitol, volemitol, erythritol, arabitol, maltitol, galactitol, threitol, functionalized glucitol, 1-deoxy-1-(methylamino)-D-glucitol and their mixtures.

5. Method of preparation according to Claim 1, in which the cationic surface-active agent is chosen from oleyl betainate mesylate, protonated amines, quaternary ammoniums and their mixtures.

6. Method of preparation according to any one of Claims 1 to 5, in which the excavation material is to be analysed and step a) is carried out on a sample of the excavation material in order to obtain an inerted material sample.

7. Method of determination of the concentration by weight of a polluting inorganic element included in an excavated material, said method of determination comprising the following steps:
b) leaching a sample of inerted material obtained during the inerting step a) of the method of preparation as defined in Claim 6 in order to obtain a leachate, and
c) determination of the concentration by weight of the polluting inorganic element in the leachate.

8. Method of determination according to Claim 7, in which:
the leaching step b) comprises the following sub-steps:
b1) solid/liquid extraction of the inerted material sample obtained during the inerting step a) with a liquid solvent, in order to obtain a mixture comprising a liquid fraction and a solid fraction,
b2) filtration of the liquid fraction obtained during the extraction step b1), in order to recover a filtered liquid fraction, and
step c) is carried out by analysing the filtered liquid fraction recovered during step b2) in order to determine the concentration by weight of the polluting inorganic element;
step b1) being carried out at a temperature T_{extraction} of from 65°C to 200°C.

9. Method of determination according to Claim 7 and/or 8, in which step b) is carried out according to French Standard NF EN 12457-2 (1st December 2002) and step c) is carried out according to French Standard NF EN 16192 (1st March 2020).

10. Method of storage of an excavation material comprising a step of storage of the inerted material obtained during the inerting step a) of the method of preparation as defined in any one of Claims 1 to 5.

11. Method of storage according to Claim 10, in which the step of storage is appropriate to storage in an Inert Waste Storage Installation, in a Non-Hazardous Waste Storage Installation or in a Hazardous Waste Storage Installation.

12. Method of valorisation of an inerted excavated material comprising a step of valorisation the inerted material obtained during the inerting step a) of the method of preparation as defined in any one of Claims 1 to 5 as building material.

13. Method according to Claim 12, in which the building material is a backfill or an aggregate.

14. Method according to Claim 12 or Claim 13, in which the step of valorisation comprises a step of production of a building material from the inerted material.

15. Method according to Claim 14, in which the production step comprises one or more sub-steps of shaping the inerted material, the sub-step(s) being appropriate to the building material.
